# EUROPEAN PATENT APPLICATION

(11) **EP 4 242 194 A1**
(43) Date of publication of application: **13.09.2023**
(21) Application number: 21889280.0
(22) Date of filing: 05.11.2021
(51) Int. Cl.: C04B 41/86, C04B 35/10

(54) **CERAMIC STRUCTURE WITH GLAZING LAYER**

(30) Priority: 05.11.2020 JP 2020185205
(71) Applicant: Kyocera Corporation, Kyoto-shi Kyoto 612-8501 (JP)
(72) Inventor: KIKUCHI, Kentaro, Kyoto-shi, Kyoto 612-8501 (JP); UENO, Takahiro, Kyoto-shi, Kyoto 612-8501 (JP); MIYATA, Takumi, Kyoto-shi, Kyoto 612-8501 (JP); TOYODA, Satoshi, Kyoto-shi, Kyoto 612-8501 (JP)
(74) Representative: Viering, Jentschura & Partner mbB Patent- und Rechtsanwälte
(86) International application number: PCT/JP2021/040861
(87) International publication number: WO 2022/097728

(57) **Abstract**

A ceramic structure with a glaze layer (1) according to the present disclosure includes a base (2) made of ceramic and a glaze layer (3) located on the base (2). The base (2) includes a first region (R1) including an interface with the glaze layer (3) and a second region (R2) farther from the glaze layer (3) than the first region (R1). The crystal grain size in the first region (R1) is smaller than the crystal grain size in the second region (R2).

## Description

### TECHNICAL FIELD

The present disclosure relates to a ceramic structure with a glaze layer.

### BACKGROUND OF INVENTION

Conventionally, there has been known a technique for providing a glaze layer to a ceramic structure, for example, with the object of ensuring airtightness, insulation, and the like.

Patent Document 1 discloses a method for manufacturing a ceramic structure with a glaze layer by preparing a sintered ceramic body, applying a glaze paste to the prepared sintered ceramic body, and then heat-treating the ceramic structure with the glaze paste applied thereon.

### CITATION LIST

### PATENT LITERATURE

Patent Document 1: JP 2007-252524 A

### SUMMARY

In an aspect of the present disclosure, a ceramic structure with a glaze layer includes a base made of a ceramic and a glaze layer located on the base. The base includes a first region including an interface with the glaze layer, and a second region farther from the glaze layer than the first region. A crystal grain size in the first region is smaller than a crystal grain size in the second region.

### BRIEF DESCRIPTION OF THE DRAWINGS

FIG. 1 is a schematic perspective view of a ceramic structure with a glaze layer according to an embodiment.
FIG. 2 is a schematic cross-sectional view of the ceramic structure with a glaze layer according to an embodiment.
FIG. 3 is a schematic enlarged view of an III portion illustrated in FIG. 2.
FIG. 4 shows SEM images of a ceramic structure according to an example and a ceramic structure according to a comparative example.
FIG. 5 is a table showing the measurement results of the average crystal grain sizes of a base in the ceramic structure according to the example and a base in the ceramic structure according to the comparative example.
FIG. 6 is a table showing the measurement results of the void ratios of the base in the ceramic structure according to the example and the base in the ceramic structure according to the comparative example.
FIG. 7 is an explanatory view of flexural strength measurement.
FIG. 8 is a table showing the flexural strength measurement results of the ceramic structure according to the example and the ceramic structure according to the comparative example.
FIG. 9 is a graph showing the measurement results of the Si concentration of a glaze layer in the ceramic structure according to the example.
FIG. 10 is a graph showing the measurement results of the Si concentration of the glaze layer in the ceramic structure according to the example.
FIG. 11 is a graph showing the measurement results of the Ca concentration of the glaze layer in the ceramic structure according to the example.
FIG. 12 is a graph showing the measurement results of the Ca concentration of the glaze layer in the ceramic structure according to the example.
FIG. 13 is a graph showing the measurement results of the Si concentration of the base in the ceramic structure according to the example.
FIG. 14 is a graph showing the measurement results of the Al concentration of the base in the ceramic structure according to the example.

### DESCRIPTION OF EMBODIMENTS

Modes (hereinafter, referred to as "embodiments") for implementing a ceramic structure with a glaze layer according to the present disclosure will be described in detail below with reference to the accompanying drawings. The embodiments described below do not intend to limit the ceramic structure with a glaze layer according to the present disclosure. In addition, embodiments can be appropriately combined so as not to contradict each other in terms of processing content. In the following embodiments, the same portions are denoted by the same reference signs, and overlapping explanations are omitted.

In the embodiments described below, expressions such as "constant", "orthogonal", "perpendicular", and "parallel" may be used, but these expressions do not need to be exactly "constant", "orthogonal", "perpendicular", and "parallel". In other words, it is assumed that the above expressions allow deviations in manufacturing accuracy, installation accuracy, or the like.

A known ceramic structure with a glaze layer has room for further improvement in terms of mechanical strength. The present disclosure provides a ceramic structure with a glaze layer that can improve mechanical strength.

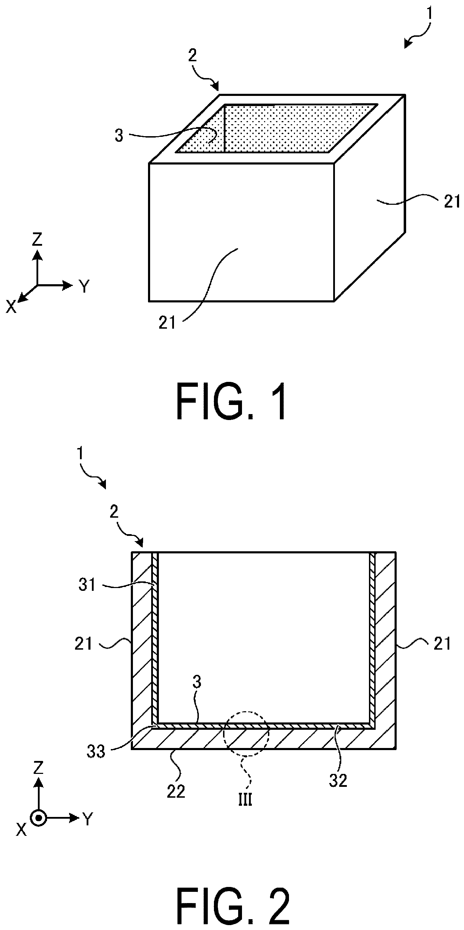

FIG. 1 is a schematic perspective view of a ceramic structure with a glaze layer according to an embodiment. FIG. 2 is a schematic cross-sectional view of the ceramic structure with a glaze layer according to an embodiment. Specifically, FIG. 2 illustrates a cross section orthogonal to a first wall portion 21 and a second wall portion 22 among cross sections of a ceramic structure 1. A base 2 of the ceramic structure 1 with a glaze layer may have a plate-like shape. An opening may be disposed in the second wall portion 22 in FIG. 2.

As illustrated in FIGs. 1 and 2, the ceramic structure 1 with a glaze layer according to an embodiment (hereinafter simply referred to as "ceramic structure 1") includes the base 2 and a glaze layer 3.

The base 2 may have a container shape. The container shape may be, for example, a shape that includes a plate-shaped portion including one main surface and another main surface, and a side wall portion integrally connected to an end portion side of the plate-shaped portion and extending in a direction from the one main surface side toward the another main surface side, in which an end portion of the side wall portion on a side opposite to the plate-shaped portion is open. As an example, as illustrated in FIGs. 1 and 2, the base 2 may have, for example, four first wall portions 21 (each equivalent to the side wall portion) and one second wall portion 22 (equivalent to the plate-shaped portion) continuous with the four first wall portions 21. The ceramic structure 1 may be open on the opposite side to the second wall portion 22. A recessed portion or a protruding portion may be located at the first wall portion 21 or the second wall portion 22.

Although the second wall portion 22 is provided herein to constitute a lower wall of the ceramic structure 1, the second wall portion 22 is not limited thereto, and may constitute an upper wall of the ceramic structure 1. That is, the ceramic structure 1 may be upside down from the state illustrated in FIG. 1. Although an example in which the contour shape of the base 2 is a quadrilateral shape in a plan view is illustrated here, the contour shape of the base 2 may be a polygonal shape other than a quadrilateral shape or may be a circular shape.

In an embodiment, the ceramic structure 1 may be used as a heat-resistant container. For example, the ceramic structure 1 may be used as a container for storing a high-temperature substance (for example, molten metal). The high-temperature substance is not limited to a liquid, and may be a solid. When the high-temperature substance is a solid, an opening may be disposed in a bottom surface and/or a wall surface of the ceramic structure 1 serving as the heat-resistant container. The ceramic structure 1 may be used as a container whose inner wall surface is at least partly exposed to plasma. In that case, an opening may be disposed in a bottom surface and/or a wall surface of the ceramic structure 1. Further, the opening may be closed by a member (for example, a heat-resistant metal member) other than the ceramic structure 1.

In an embodiment, the ceramic structure 1 is made of a ceramic. As the ceramic constituting the ceramic structure 1, an aluminum oxide ceramic, a silicon nitride ceramic, an aluminum nitride ceramic, a silicon carbide ceramic, or the like may be used.

The ceramic structure 1 made of an aluminum oxide ceramic exhibits excellent mechanical characteristics while being relatively inexpensive among ceramics in terms of raw material cost and manufacturing cost as well. In addition, discarding the ceramic structure 1 with a glaze layer is less likely to cause environmental pollution.

An aluminum oxide ceramic may contain 85 mass% or more of alumina (Al₂O₃) from among 100 mass% of all components constituting the ceramic. That is, a ceramic containing alumina as a main component is called an aluminum oxide ceramic. In the present embodiment, the base 2 may be made of an aluminum oxide ceramic (that is, a ceramic containing alumina as a main component). In the embodiment, the base 2 may contain 90 mass% or more of alumina. In the embodiment, the content percentage of alumina in the base 2 may be 96 mass% or less.

For example, the method below can be used to confirm the material of the base 2. First, the base 2 is measured using an X-ray diffractometer (XRD), and an obtained value of 2θ (where 2θ is a diffraction angle) is checked against a JCPDS card. Next, a quantitative analysis of aluminum (Al) is performed using an ICP emission spectrophotometer (ICP) or an X-ray fluorescent (XRF) analyzer. Then, when the content percentage of aluminum oxide (Al₂O₃), which is a value converted from the content percentage of Al measured by ICP or XRF, is 85 mass% or greater, the material of the base 2 is an aluminum oxide ceramic.

The base 2 may contain a component used as a sintering aid. Specifically, the base 2 may contain Si (silicon). The sintering aid may contain, for example, Ca (calcium), Mg (magnesium), or the like in addition to Si.

The base 2 may have a density of 3.5 g/cm³ or more. In the base 2, an area ratio of pores measured in a cross section may be 0.5% or less. Such a dense base has a particularly high strength.

The glaze layer 3 may be disposed on an inner surface of the base 2. The glaze layer 3 may be provided on the inner surface of the base 2, for example, in order to ensure the airtightness, the insulation, and the like of the ceramic structure 1.

As described above, by providing the glaze layer 3 on the inner surface of the base 2 having a container shape, stress remains in a direction in which the opening of the container is closed (a direction toward the center of the opening), and thus the mechanical strength of the ceramic structure 1 is improved.

Although FIGs. 1 and 2 illustrate an example in which the glaze layer 3 is disposed only on the inner surface of the base 2, the glaze layer 3 may also be disposed on an outer surface of the base 2. The base 2 may be entirely covered by the glaze layer 3.

The glaze layer 3 may contain at least Si (silicon) as a metal element. For example, the glaze layer 3 may contain Al (aluminum), Ca (calcium), K (potassium), Na (sodium), or the like in addition to Si as a metal element.

When both of the base 2 and the glaze layer 3 contain Si, the chemical bonding between the base 2 and the glaze layer 3 is improved. Accordingly, the mechanical strength of the ceramic structure 1 is improved.

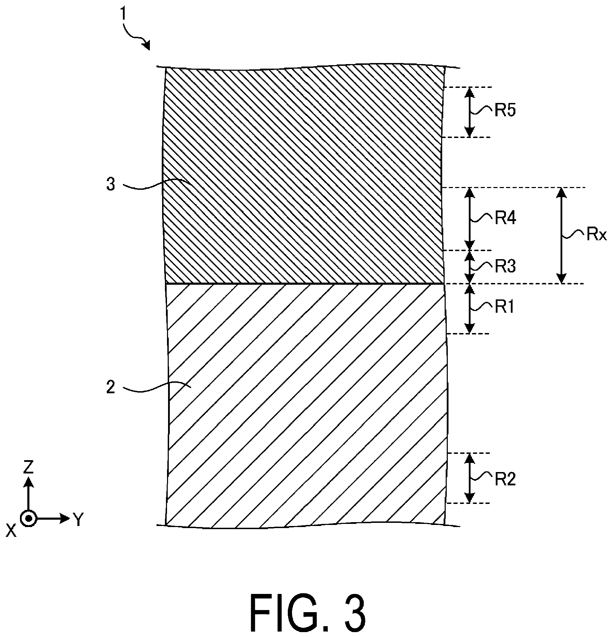

FIG. 3 is a schematic enlarged view of an III portion illustrated in FIG. 2. As illustrated in FIG. 3, in the base 2, a region including an interface with the glaze layer 3 is defined as a first region R1.

As will be described later, the main component of the glaze layer 3 is impregnated into the base 2 from the interface between the base 2 and the glaze layer 3. The concentration of the main component of the glaze layer 3 gradually decreases from the interface between the base 2 and the glaze layer 3 toward a center portion of the base 2 in a depth direction. Thus, a range in which the concentration of the main component (for example, Si) of the glaze layer 3 inclines (decreases) along the depth direction of the base 2 may be specified as the first region R1. Specifically, when the Si concentration in the center portion of the base 2 in the depth direction is defined as a "center portion concentration" and the interface between the base 2 and the glaze layer 3 is defined as "one end portion" of the first region R1, "the other end portion" of the first region R1 may be located at a position in the depth direction of the base 2 at which Si concentration coincides with the central portion concentration.

For example, the first region R1 may be a region from the interface with the glaze layer 3 to a depth of 70 µm. In the base 2, a region farther from the glaze layer 3 than the first region R1, in other words, a region located more inward in the base 2 than the first region R1 (a deeper portion when viewed from the glaze layer 3 side) is defined as a second region R2.

For example, one end portion of the second region R2 (end portion on the glaze layer 3 side) may be separated from the other end portion of the first region R1 by at least 150 µm. For example, the second region R2 is a region from a depth of 1000 µm (1 mm) to a depth of 1020 µm with reference to the interface with the glaze layer 3.

In the ceramic structure 1 according to an embodiment, a crystal grain size in the first region R1 may be smaller than a crystal grain size in the second region R2.

In this manner, by making the crystal grain size of the first region R1 smaller than the crystal grain size of the second region R2, the mechanical strength of the base 2 is improved.

By making the crystal grain size of the second region R2 larger than the crystal grain size of the first region R1, the following effect is obtained. That is, the Young's modulus of the second region R2 having the larger crystal grain size is larger than the Young's modulus of the first region R1 having the smaller crystal grain size. For this reason, when repeated stresses (tensile stresses or compressive stresses) are simultaneously applied to the first region R1 and the second region R2, the generation of fine cracks from the second region R2 is suppressed, and thus the occurrence of fatigue failure from the second region R2 is suppressed. This is because the larger the Young's modulus is, the more elastic deformation due to stress application is suppressed. Here, fatigue fracture refers to the formation of fine cracks in the base 2 when a stress smaller than the fracture strength is applied many times, and eventually these fine cracks become larger, resulting in a decrease in mechanical strength or causing fracture (breakage). On the other hand, the first region R1 has a smaller crystal grain size than the second region R2, and thus, although the first region R1 has a smaller Young's modulus than the second region R2, the first region R1 has a large flexural strength and can suppress the generation of fine cracks when subjected to repeated stresses. As a result, in an embodiment, the ceramic structure 1 maintains high mechanical flexural strength and is less likely to cause fatigue failure even when subjected to repeated stresses.

Further, by making the crystal grain size of the second region R2 larger than the crystal grain size of the first region R1, the following effect is also obtained. That is, by making the crystal grain size of the second region R2 larger, the thermal conductivity of the second region R2 can be made higher than the thermal conductivity of the first region R1. Thus, when heat is transferred from the glaze layer 3 to the base 2, the heat can be efficiently transferred from the first region R1 to the second region R2. This suppresses the generation of thermal stress between the first region R1 and the second region R2. Accordingly, even when thermal stress is applied to the base 2 due to a rapid temperature change, cracking or fracture of the base 2 is suppressed.

In the ceramic structure 1 according to an embodiment, a void ratio in the first region R1 may be lower than a void ratio in the second region R2.

By lowering the void ratio of the first region R1 in contact with the glaze layer 3 as described above, the generation of cracks in the base 2 from the interface between the base 2 and the glaze layer 3 is suppressed. Thus, in an embodiment, the ceramic structure 1 has a high mechanical strength.

In an embodiment, the ceramic structure 1 may include, between the first region R1 and the second region R2, a region having an average crystal grain size smaller than an average grain size of the second region R2. In other words, the ceramic structure 1 may include, between the first region R1 and the second region R2, a region having an average crystal grain size equivalent to an average grain size of the first region R1.

In an embodiment, the glaze layer 3 may contain Si as a metal element as described above. Compared with a center portion of the glaze layer 3 in a thickness direction, the Si concentration of the glaze layer 3 may be lower in a region closer to the base 2 than the center portion.

By reducing the amount of Si contained in the glaze layer 3 on the base 2 side as described above, the residual stress applied to the base 2 is reduced and the mechanical strength of the ceramic structure 1 is improved.

In an embodiment, the glaze layer 3 may contain Ca as a metal element as described above. Compared with a center portion of the glaze layer 3 in a thickness direction, the Ca concentration of the glaze layer 3 is higher in a region closer to the base 2 than the center portion.

By increasing the amount of Si contained in the glaze layer 3 on the base 2 side as described above, the residual stress applied to the base 2 is reduced and the mechanical strength of the ceramic structure 1 is improved.

As illustrated in FIG. 3, the glaze layer 3 may include a Si concentration increase region Rx in which the Si concentration increases with increasing distance from the interface with the base 2.

By setting the Si content of the glaze layer 3 such that the farther from the base 2, the larger the Si content, the base 2 can be caused to generate compressive stress. Accordingly, the mechanical strength of the ceramic structure 1 is improved. From another viewpoint, the thermal expansion coefficient of the glaze layer 3 in contact with the base 2 can be made close to the thermal expansion coefficient of the base 2 by reducing the Si content in the glaze layer 3 close to the base 2. As a result, the difference in thermal expansion coefficient between the base 2 and the glaze layer 3 is reduced, and the residual stress between the base 2 and the glaze layer 3 is reduced. Accordingly, the mechanical strength of the ceramic structure 1 is improved.

The Si concentration increase region Rx may include a third region R3 including the interface with the base 2 and a fourth region R4 continuous with the third region R3 and farther from the base 2 than the third region R3. In this case, the rate of increase of the Si concentration in the third region R3 may be greater than the rate of increase of the Si concentration in the fourth region R4.

According to such a configuration, since a residual stress applied to an outer surface of the glaze layer 3 is reduced, the mechanical strength of the ceramic structure 1 is improved.

The glaze layer 3 may include a fifth region R5 farther from the base 2 than the fourth region R4 in the Si concentration increase region Rx. In this case, the rate of change of the Si concentration in the fifth region R5 may be smaller than the rate of change of the Si concentration in the fourth region R4. Specifically, the Si concentration in the fifth region R5 may be substantially constant.

According to such a configuration, when a crack is generated in a surface of the base 2, the crack is suppressed from propagating to the glaze layer 3, and thus the mechanical strength of the ceramic structure 1 is improved.

As described above, the Si concentration in the first region R1 is higher than the Si concentration in the center portion of the base 2 in the depth direction, for example, the Si concentration in the second region R2.

When the amount of Si in a portion of the base 2 close to the glaze layer 3 is increased as described above, rapid changes in a thermal expansion coefficient in a region near the interface between the glaze layer 3 and the base 2 is suppressed. As a result, the residual stress between the base 2 and the glaze layer 3 after the glaze layer 3 is solidified is reduced, and the mechanical strength of the ceramic structure 1 is improved.

In an embodiment, the base 2 may contain Al as described above. In the base 2, the Al concentration in the first region R1 may be lower than the Al concentration in the center portion of the base 2 in the depth direction, for example, the Al concentration in the second region R2.

When the amount of Al in a portion of the base 2 close to the glaze layer 3 is reduced as described above, a rapid change in a thermal expansion coefficient in a region near the interface between the glaze layer 3 and the base 2 is suppressed. As a result, the residual stress between the base 2 and the glaze layer 3 after the glaze layer 3 is solidified is reduced, and the mechanical strength of the ceramic structure 1 is improved.

In the embodiment, in the glaze layer 3 of the ceramic structure 1, the thickness of a glaze layer 33 located on an edge portion between the first wall portion 21 and the second wall portion 22 (a side of the inner bottom surface of the container) may be thicker than the thickness of a glaze layer 31 located on the first wall portion 21 and the thickness of a glaze layer 32 located on the second wall portion 22.

Thermal shock tends to concentrate on the edge portion between the first wall portion 21 and the second wall portion 22. In this regard, by making the thickness of the glaze layer 31 on the edge portion relatively thick, the strength of the edge is increased and, consequently, the generation of cracks and/or breaks in the edge portion due to thermal shock is suitably suppressed.

The thickness of the glaze layer 3 located on an edge portion between the first wall portions 21 adjacent to each other may be thicker than the thickness of the glaze layer 31 located on the first wall portion 21 and the thickness of the glaze layer 32 located on the second wall portion 22. With this configuration, the generation of cracks and/or breaks in the edge portion due to thermal shock is suitably suppressed.

### Method for Manufacturing Ceramic Structure 1

An example of a method for manufacturing the ceramic structure 1 will be described below. First, an unglazed body of a ceramic is prepared. Here, the unglazed body is obtained by heat-treating a green body of the base 2 at a temperature lower by 200 to 800°C than a sintering temperature (sintering temperature in the absence of a glaze). For example, the unglazed body is obtained by heat-treating the green body of the base 2 at 1000°C for 30 minutes.

A procedure for preparing the green body of the base 2 is as follows. First, an aluminum oxide (Al₂O₃) powder as a main raw material of the base 2, a silicon oxide (SiO₂) powder as a sintering aid, a calcium carbonate (CaCO₃) powder, a magnesium carbonate (MgCO₃) powder, and the like are mixed in predetermined proportions, and then subjected to wet grinding to obtain a primary slurry. Then, a binder is added to and mixed with the primary slurry to obtain a secondary slurry. The secondary slurry is spray-dried to prepare granules. The prepared granules are uniaxially press-molded into a container shape to obtain the green body.

Subsequently, a paste containing a glaze, for example, a known glaze raw material powder is mixed with a liquid and a binder and kneaded to obtain a glaze paste or a low-viscosity liquid glaze. The glaze paste is applied to an unglazed body having an approximate porosity (void ratio) of about 30 to 50 vol%. The method of application is not particularly limited and may be, for example, spraying, atomizing, impregnation, or the like. For example, the glaze paste is stored in a tank, and the unglazed body is immersed in the tank, and thereby the unglazed body can be impregnated with the glaze paste. Then, the unglazed body is taken out from the tank, and the glaze paste accumulated inside the container is discharged. At this time, a relatively large amount of the glaze paste remains on the four sides of the inner bottom surface of the container, and thus the thickness of the glaze layer on the four sides of the inner bottom surface of the container becomes relatively thick.

Subsequently, the unglazed body with the glaze applied thereon is heat-treated so that the sintering of the unglazed body and the densification (solidification) of the glaze are simultaneously performed. For example, the unglazed body with the glaze applied thereon is heat-treated at 1350°C or higher and 1450°C or lower for 2 hours. As a result, the ceramic structure 1 according to an embodiment can be obtained.

A part of the glaze paste enters into open pores and communication pores of the unglazed body, and thereby a part of the glaze remains on a surface of the unglazed body. When the unglazed body is sintered in this state, the sintering proceeds with the glaze remaining in the open pores and the communication pores of the unglazed body. The open pores refer to pores opening on an application surface to which the glaze is applied. The communication pores refer to pores communicating from the application surface to the inside of the unglazed body. The glaze is initially in a paste state, and when melted by heat treatment, the glaze becomes a low-viscosity melt. After the temperature is lowered in the sintering step, the glaze remains solidified in the open pores and the communication pores. As a result, the crystal grain size in the portions of the base 2 in which the glaze entered is smaller than the crystal grain size in other portions. Similarly, the void ratio in the portions of the base 2 in which the glaze entered is lower than the void ratio in other portions. Specifically, the void ratio in the first region R1 of the base 2 is 1/3 or less of the void ratio in the second region R2 of the base 2. More specifically, the void ratio in the first region R1 of the base 2 is 2% or less.

As described above, a part of the glaze located near the interface with the unglazed body enters into the open pores and the communication pores of the unglazed body. In this state, the sintering of the unglazed body proceeds. At this time, the Si contained in the glaze moves to regions of the unglazed body that were the open pores and the communication pores, and thus regions of the glaze layer 3 near the base 2 contain relatively less Si.

A method for forming the Si concentration increase region Rx in the glaze layer 3 is the same as or similar to the method described above. As another method, for example, the glaze may be applied in multiple layers. At this time, for example, by adjusting the Si concentration in the glaze of a first layer to be lower than the Si concentration in the glaze of a second layer, the Si concentration increase region Rx can be suitably formed. The unglazed body may be subjected to a drying treatment after the first layer of the glaze is applied, or the second layer of the glaze may be successively applied without performing the drying treatment.

### EXAMPLES

An example of the ceramic structure according to the present disclosure will be described. For the ceramic structure manufactured by the method described above, the inventors of the present application measured the crystal grain size and the void ratio of the base, the flexural strength, the Si concentration and the Ca concentration of the glaze layer, and the Si concentration and the Al concentration of the base.

The composition of the ceramic structure used in the measurement is as follows.
Glaze Layer
SiO₂ 80 mass%
Al₂O₃ 12.5 mass%
K₂O 5 mass%
CaO 1 mass%
Na₂O 1 mass%
Others 0.5 mass%
Others are trace impurities such as Fe₂O₃, TiO₂, and MgO, for example.
Base
Al₂O₃ 86 mass%
SiO₂ 9 mass%
MgO 2.3 mass%
CaO 1.4 mass%
TiO₂ 1 mass%
Others 0.3 mass%
Others are trace impurities such as Fe₂O₃, Na₂O, and K₂O, for example.

### Crystal Grain Size of Base

The inventors of the present application measured the crystal grain size of a base of a ceramic structure according to the example and the grain size of a base of a ceramic structure according to a comparative example. Here, the ceramic structure according to the comparative example was obtained by sintering a base, applying a glaze to the sintered base, and performing heat treatment to densify the glaze layer. A cut surface of each ceramic structure was polished to obtain a mirror surface, and the obtained mirror surface was observed at measurement locations using a SEM (scanning electron microscope) at a magnification of about 3000 times. Then, the average crystal grain size was calculated based on the obtained SEM image using a coding method. Specifically, three line segments (two diagonal lines and one horizontal line) were drawn on the obtained SEM image (image framed by a rectangle), and the average crystal grain size was calculated based on the lengths of the line segments and the number of crystals (grains) intersecting the line segments. Among the crystals located on the edges of the SEM image, the crystals overlapping with the line segments were included in the number of crystals for calculating the crystal grain size.

The average crystal grain size may be calculated based on a BEM image (backscattered electron image) instead of the SEM image (secondary electron image).

The measurement locations were three regions, that is, a region from the interface between the base and the glaze layer to a depth of 20 µm inside the base (corresponding to a part of the first region R1 described above, and hereinafter referred to as an "interface region"), a region from a depth of 100 µm to a depth of 120 µm with reference to the interface between the base and the glaze layer (hereinafter referred to as an "intermediate region"), and a region from a depth of 1000 µm (1 mm) to a depth of 1020 µm with reference to the interface between the base and the glaze layer (corresponding to the second region R2 described above, and hereinafter referred to as a "deep region").

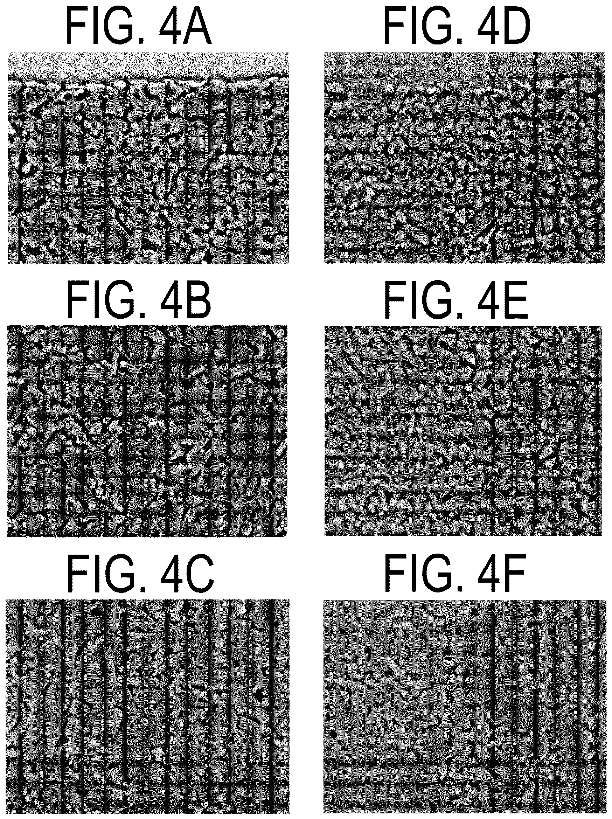

FIG. 4 shows SEM images of the ceramic structure according to the example and the ceramic structure according to the comparative example. FIGs. 4A to 4C are SEM images of the ceramic structure according to the comparative example, and FIGs. 4D to 4F are SEM images of the ceramic structure according to the example. FIGs. 4A and 4D are SEM images of the interface regions, FIGs. 4B and 4E are SEM images of the intermediate regions, and FIGs. 4C and 4F are SEM images of the deep regions.

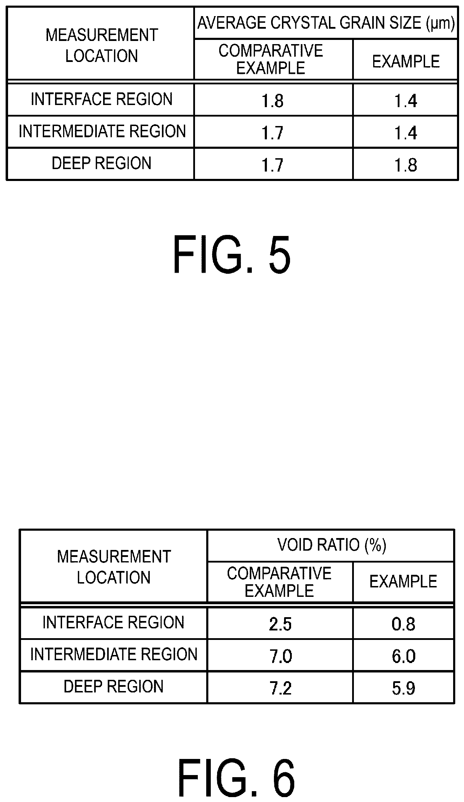

FIG. 5 is a table showing the measurement results of the average crystal grain sizes of the base in the ceramic structure according to the example and the base in the ceramic structure according to the comparative example.

As shown in FIGs. 4A to 4C, the crystal grain size of the base in the ceramic structure according to the comparative example was roughly the same in the interface region, the intermediate region, and the deep region. On the other hand, FIGs. 4D to 4F show that the crystal grain size of the base in the ceramic structure according to the example was smaller in the interface region than in the deep region. Specifically, the crystal grain size in the interface region was about 80% of the crystal grain size in the deep region.

Specifically, as shown in FIG. 5, the crystal grain size of the base in the ceramic structure according to the comparative example was 1.8 µm in the interface region, 1.7 µm in the intermediate region, and 1.7 µm in the deep region. On the other hand, the crystal grain size of the base in the ceramic structure according to the example was 1.4 µm in the interface region, 1.4 µm in the intermediate region, and 1.8 µm in the deep region.

As described above, in the ceramic structure according to the example, the crystal grain size of the base in the first region including the interface with the glaze layer was smaller than the crystal grain size of the base in the second region farther from the glaze layer than the first region.

### Void Ratio of Base

The inventors of the present application measured the void ratio of the base of the ceramic structure according to the example and the void ratio of the base of the ceramic structure according to the comparative example. The above-described mirror surface was observed by using a metallurgical microscope at a magnification of about 200 times, and an obtained image was binarized by using the image analysis software "A zou-kun" (trade name, manufactured by Asahi Kasei Engineering Corporation, and, hereinafter, when the image analysis software "A zou-kun" is mentioned in the following, it refers to the image analysis software manufactured by the Asahi Kasei Engineering Corporation). Then, the binarized image was analyzed to calculate the void ratio. Measurement locations are the above described three regions of the interface region, the intermediate region, and the deep region. The binarization of the image may be executed by using image analysis software other than "A zou-kun". As the image analysis software other than "A zou-kun", for example, a digital microscope manufactured by KEYENCE CORPORATION (for example, VHX-5000, VHX-7000, or VHX-8000) can be used.

FIG. 6 is a table showing the measurement results of the void ratios of the base in the ceramic structure according to the example and the base in the ceramic structure according to the comparative example. As shown in FIG. 6, the void ratio of the base in the ceramic structure according to the comparative example was 2.5% in the interface region, 7.0% in the intermediate region, and 7.2% in the deep region. On the other hand, the void ratio of the base in the ceramic structure according to the example was 0.8% in the interface region, 6.0% in the intermediate region, and 5.9% in the deep region.

As described above, in the ceramic structure according to the example, the void ratio of the base in the first region including the interface with the glaze layer was smaller than the void ratio of the base in the second region farther from the glaze layer than the first region. Specifically, in the ceramic structure according to the example, the void ratio in the first region was 1/6 of the void ratio in the second region.

### Flexural Strength of Ceramic Structure

The inventors of the present application measured the flexural strength of the ceramic structure according to the example and the flexural strength of the ceramic structure according to the comparative example using a plurality of measurement samples having different glaze layer thicknesses. The glaze layer thicknesses were 5 patterns of 50 µm, 65 µm, 75 µm, 100 µm and 180 µm.

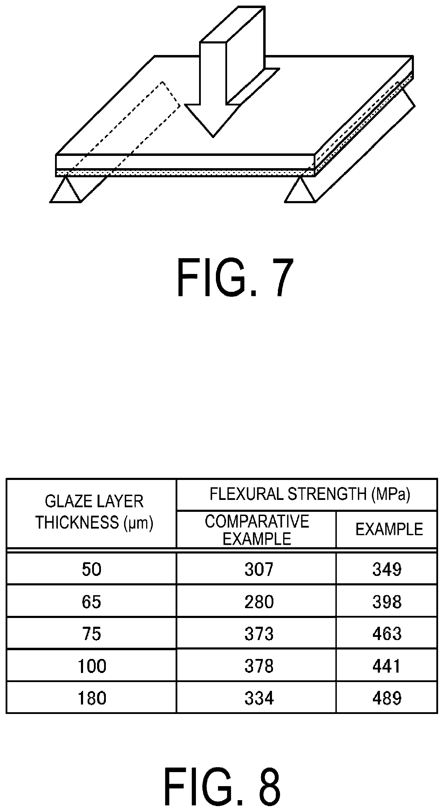

FIG. 7 is an explanatory view of flexural strength measurement. As illustrated in FIG. 7, first, measurement samples having a plate-like shape were prepared. The dimensions of each measurement sample were 30 mm length, 15 mm width, and 2 mm thickness. The measurement sample was placed on the ridge portions of two support members having a triangular prism shape with a glaze layer facing downward. The distance between the two support members was 25 mm. An intermediate position between the two support members on the measurement sample was pressed from above the measurement sample by using a terminal. The terminal linearly pressed the measurement sample in parallel with the ridge portions of the support members. Then, the pressure applied to the measurement sample from the terminal when the measurement sample was broken was calculated as a flexural strength.

FIG. 8 is a table showing the flexural strength measurement results of the ceramic structure according to the example and the ceramic structure according to the comparative example. As shown in FIG. 8, the flexural strength of the ceramic structure according to the comparative example was 307 MPa for a glaze layer thickness of 50 µm, 280 MPa for a glaze layer thickness of 65 µm, 373 MPa for a glaze layer thickness of 75 µm, 378 MPa for a glaze layer thickness of 100 µm, and 334 MPa for a glaze layer thickness of 180 µm. On the other hand, the flexural strength of the ceramic structure according to the embodiment was 349 MPa for a glaze layer thickness of 50 µm, 398 MPa for a glaze layer thickness of 65 µm, 463 MPa for a glaze layer thickness of 75 µm, 441 MPa for a glaze layer thickness of 100 µm, and 489 MPa for a glaze layer thickness of 180 µm.

This shows that the ceramic structure according to the example has higher mechanical strength than the ceramic structure according to the comparative example. In addition, the mechanical strength of the ceramic structure according to the example increases with the increasing glaze layer thickness.

### Si Concentration and Ca Concentration of Glaze Layer

The inventors of the present application measured the Si concentration and Ca concentration of the glaze layer in the ceramic structure according to the example. The Si concentration and the Ca concentration were measured by using a wavelength-dispersive X-ray spectroscopy (WDS) apparatus.

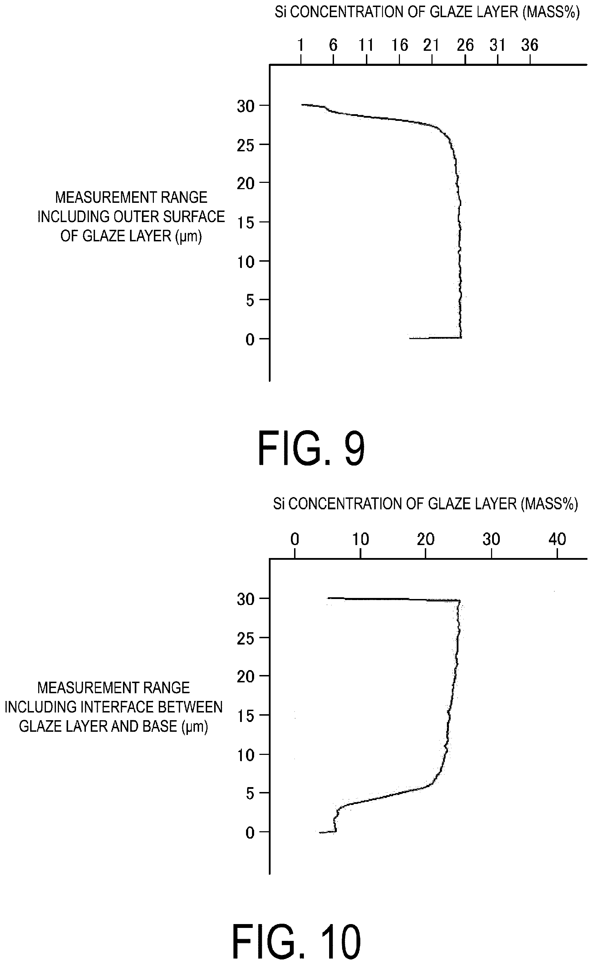

FIGs. 9 and 10 are graphs showing the measurement results of the Si concentration of the glaze layer in the ceramic structure according to the example. FIG. 9 shows the measurement results of the Si concentration in a measurement range of 30 µm in the depth direction including the outer surface of the glaze layer (a surface located on the opposite side to the interface with the base). FIG. 10 shows the measurement results of the Si concentration in a measurement range of 30 µm in the depth direction including the interface with the base.

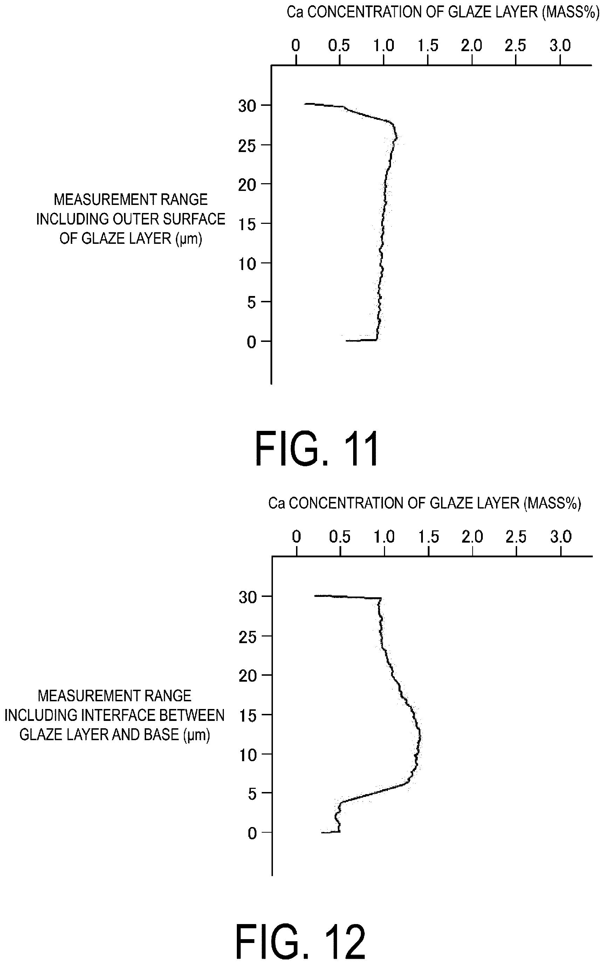

In FIG. 9, the position of the outer surface of the glaze layer is around 30 µm. In FIG. 10, the position of the interface between the glaze layer and the base is around 5 µm. In the graphs shown in FIGs. 9 and 10, the behaviors of the graphs at measurement start points and measurement end points (in FIGs. 9 and 10, 0 µm and 30 µm, respectively) depend on the specifications of the measurement apparatus, and thus are disregarded. This is also true for FIGs. 11 to 14 to be described later.

As shown in FIG. 10, the glaze layer according to the example includes a Si concentration increase region in which the Si concentration increases with increasing distance from the interface with the base. The Si concentration increase region is, for example, a region from the interface with the base (the 5 µm position shown in FIG. 10) to a depth of 20 µm (the 25 µm position shown in FIG. 10).

In the Si concentration increase region according to the example, the rate of increase of the Si concentration in a region including the interface with the base (corresponding to the third region R3) is larger than the rate of increase of the Si concentration in a region farther from the base than the third region (corresponding to the fourth region R4). The third region here is, for example, a region from the interface with the base to a depth of 2 µm. The fourth region here is a region other than the third region in the Si concentration increase region.

As shown in FIG. 9, in the glaze layer according to the example, the rate of change of the Si concentration in a region still farther from the base than the fourth region (corresponding to the fifth region R5) is smaller than the rate of change of the Si concentration in the fourth region. The fifth region here is, for example, the 0 to 10 µm region shown in FIG. 9. The Si concentration in the fifth region is substantially constant.

FIGs. 11 and 12 are graphs showing the measurement results of the Ca concentration of the glaze layer in the ceramic structure according to the example. FIG. 11 shows the measurement results of the Ca concentration in a measurement range of 30 µm in the depth direction including the outer surface of the glaze layer. FIG. 12 shows the measurement results of the Ca concentration in a measurement range of 30 µm in the depth direction including the interface with the base.

As shown in FIG. 12, the glaze layer according to the example includes a Ca concentration increase region in which the Ca concentration increases with increasing distance from the interface with the base. The Ca concentration increase region is, for example, a region from the interface with the base (the 5 µm position shown in FIG. 12) to a depth of 7.5 µm (the 12.5 µm position shown in FIG. 12).

In the Ca concentration increase region according to the example, the rate of increase of the Ca concentration in a region including the interface with the base (hereinafter referred to as an eighth region) is larger than the rate of increase of the Ca concentration in a region farther from the base than the eighth region (hereinafter referred to as a ninth region). The eighth region is, for example, a region from the interface with the base to a depth of 2 µm. The ninth region is a region other than the eighth region in the Si concentration increase region.

### Si Concentration and Al Concentration of Base

The inventors of the present application measured the Si concentration and the Al concentration of the base in the ceramic structure according to the example. A method for measuring the Si concentration and the Al concentration in the base is the same as or similar to the method for measuring the Si concentration and the Ca concentration in the glaze layer described above.

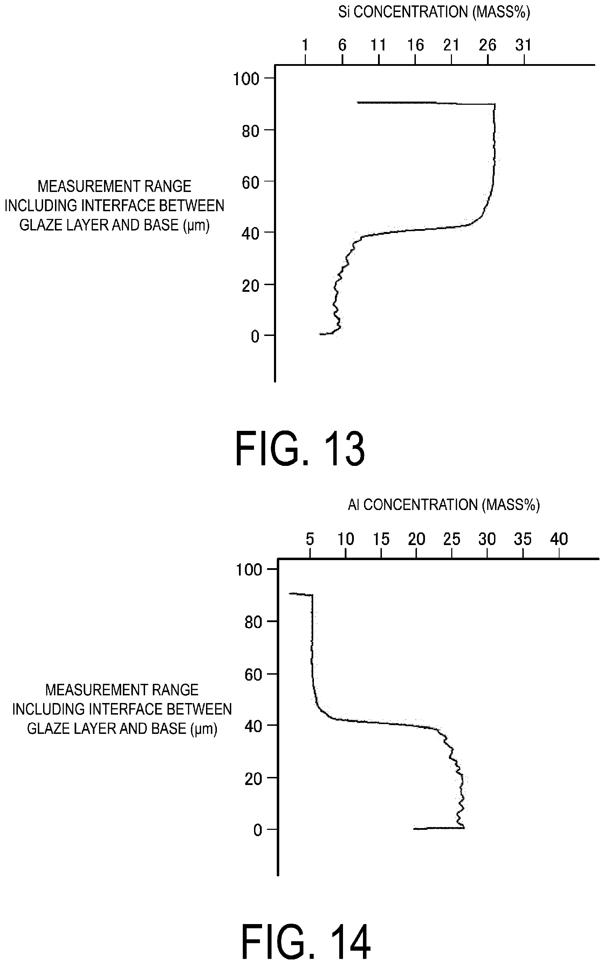

FIG. 13 is a graph showing the measurement results of the Si concentration of the base in the ceramic structure according to the example. FIG. 14 is a graph showing the measurement results of the Al concentration of the base in the ceramic structure according to the example. FIGs. 13 and 14 show the measurement results of the Si concentration and the Ca concentration in a measurement range of 90 µm in the depth direction including the interface between the base and the glaze layer. In FIGs. 13 and 14, the position of the interface between the glaze layer and the base is around 40 µm, and a range of 0 to 40 µm corresponds to the base and a range of 40 to 90 µm corresponds to the glaze layer.

FIG. 13 shows that the Si concentration in a region of the base including the interface with the glaze layer (corresponding to the interface region) is higher than the Si concentration in a region of the base farther from the glaze layer than the interface region. The interface region here is, for example, a region from the interface between the base and the glaze layer (the 40 µm position shown in FIG. 13) to a depth of 20 µm (the 20 µm position shown in FIG. 13). The region of the base farther from the glaze layer than the interface region is, for example, a region from a position 20 µm deeper than the interface region (0 µm shown in FIG. 13) to the lower end of the interface region (20 µm shown in FIG. 13).

FIG. 14 shows that the Al concentration in a region of the base including the interface with the glaze layer (corresponding to the interface region) is lower than the Al concentration in a region of the base farther from the glaze layer than the interface region. The interface region here is, for example, a region from the interface between the base and the glaze layer (the 40 µm position shown in FIG. 14) to a depth of 20 µm (the 20 µm position shown in FIG. 14). The region of the base farther from the glaze layer than the interface region is, for example, a region from a position 20 µm deeper than the interface region (0 µm shown in FIG. 14) to the lower end of the interface region (20 µm shown in FIG. 14).

### Measurement of Glaze Layer Thickness

The ceramic structure according to the example was cut along a plane orthogonal to the first wall portion and the second wall portion, and the thickness of the glaze layer located in the cut surface was measured. Measurement was performed at three locations as indicated by the reference signs 31 to 33 shown in FIG. 2. Then, the thickness of the glaze layer located on the first wall portion was 260 µm, the thickness of the glaze layer located on the second wall portion was 295 µm, and the thickness of the glaze layer located on the edge portion between the first wall portion and the second wall portion was 596 µm. These results show that the thickness of the glaze layer is relatively thick on the edge portion between the first wall portion and the second wall portion.

The thickness of the glaze layer on an edge portion between two adjacent first wall portions was also measured. Specifically, the ceramic structure according to the example was cut along a plane orthogonal to the first wall portion and parallel to the second wall portion, and the thickness of the glaze layer located in the cut surface was measured. Then, the thickness of the glaze layer located on the edge portion between the two adjacent first wall portions was 360 µm.

The thickness of the glaze layer on four corners inside the base was also measured. Specifically, the ceramic structure according to the example was cut along a plane passing through both an outer edge portion and an inner edge portion between two adjacent first wall portions, and the thickness of the glaze layer located in the cut surface was measured. Then, the thickness of the glaze layer located on the four corners inside the base was 851 µm.

As described above, in the ceramic structure according to an embodiment, the thickness of the glaze layer is large at the edge portion between the first wall portion and the second wall portion (including the four corners inside the base).

As described above, in an embodiment, a ceramic structure with a glaze layer (for example, the ceramic structure 1) includes a base made of ceramic (as an example, the base 2) and a glaze layer (for example, the glaze layer 3) located on the base. The crystal grain size of the base in a first region (for example, the first region R1) including an interface with the glaze layer is smaller than the crystal grain size of the base in a second region (for example, the second region R2) farther from the glaze layer than the first region.

In an embodiment, a ceramic structure with a glaze layer (for example, the ceramic structure 1) includes a base made of ceramic (for example, the base 2) and a glaze layer (for example, the glaze layer 3) located on the base. The void ratio of the base in a first region (for example, the first region R1) including an interface with the glaze layer is smaller than the void ratio of the base in a second region (for example, the second region R2) farther from the glaze layer than the first region.

Thus, according to the ceramic structures with a glaze layer according to the respective embodiments, the mechanical strength can be improved.

In the embodiments described above, a case in which the base 2 is made of an aluminum oxide ceramic is described as an example. However, the base 2 may be made of a material other than aluminum oxide ceramic. The material other than the aluminum oxide ceramic may be, for example, cordierite, forsterite, zirconia, or the like.

Further effects and variations can be readily derived by those skilled in the art. Thus, a wide variety of aspects of the present invention are not limited to the specific details and representative embodiments represented and described above. Accordingly, various changes are possible without departing from the spirit or scope of the general inventive concepts defined by the appended claims and their equivalents.

### REFERENCE SIGNS

1: Ceramic structure with a glaze layer
2: Base
3: Glaze layer
21: First wall portion
22: Second wall portion
R1: First region
R2: Second region
R3: Third region
R4: Fourth region
R5: Fifth region
Rx: Si concentration increase region

## Claims

1. A ceramic structure with a glaze layer, the ceramic structure comprising:
a base made of a ceramic; and
a glaze layer located on the base, wherein
the base comprises a first region and a second region, the first region comprising an interface with the glaze layer, the second region being farther from the glaze layer than the first region, and
a crystal grain size in the first region is smaller than a crystal grain size in the second region.

2. The ceramic structure with a glaze layer according to claim 1, wherein
the glaze layer contains at least Si as a metal element, and
a Si concentration of the glaze layer is, compared with a center portion of the glaze layer in a thickness direction, lower in a region closer to the base than the center portion.

3. The ceramic structure with a glaze layer according to claim 2, wherein
the glaze layer comprises a Si concentration increase region, and in the Si concentration increase region, a Si concentration increases with increasing distance from the interface.

4. The ceramic structure with a glaze layer according to claim 3, wherein
the Si concentration increase region comprises a third region comprising the interface with the base and a fourth region farther from the base than the third region, and
a rate of increase of a Si concentration in the third region is larger than a rate of increase of a Si concentration in the fourth region.

5. The ceramic structure with a glaze layer according to claim 4, wherein
the glaze layer comprises a fifth region still farther from the base than the fourth region, and
a rate of change of a Si concentration in the fifth region is smaller than a rate of change of a Si concentration in the fourth region.

6. The ceramic structure with a glaze layer according to any one of claims 1 to 5, wherein
the base contains Si, and
a Si concentration in the first region is higher than a Si concentration in the second region.

7. The ceramic structure with a glaze layer according to claim 6, wherein
the base contains Al, and
an Al concentration in the first region is lower than an Al concentration in the second region.

8. The ceramic structure with a glaze layer according to any one of claims 1 to 7, wherein
a main component of the base is alumina.

9. The ceramic structure with a glaze layer according to any one of claims 1 to 8, wherein
the base has a shape of a container, and
the glaze layer is disposed on an inner surface of the container.

10. The ceramic structure with a glaze layer according to claim 9, wherein
the base comprises a plate-shaped portion comprising one main surface and another main surface, and a side wall portion integrally connected to the plate-shaped portion and extending in a direction from the one main surface toward the other main surface, and
a thickness of the glaze layer on an edge between the plate-like portion and the side wall portion is thicker than a thickness of the glaze layer on the plate-like portion and the side wall portion.

11. The ceramic structure with a glaze layer according to any one of claims 1 to 10, which is used as a heat-resistant container.
